# EUROPEAN PATENT APPLICATION

(11) **EP 4 418 436 A1**
(43) Date of publication of application: **21.08.2024**
(21) Application number: 23802503.5
(22) Date of filing: 22.03.2023
(51) Int. Cl.: H01M 50/502, H01M 50/531

(54) **ELECTRODE ASSEMBLY, BATTERY CELL, BATTERY AND ELECTRIC DEVICE**

(30) Priority: 13.05.2022 CN 202221145650 U
(71) Applicant: Contemporary Amperex Technology Co., Limited, Ningde, Fujian 352100 (CN)
(72) Inventor: PENG, Longqing, Ningde, Fujian 352100 (CN); TANG, Huaichao, Ningde, Fujian 352100 (CN); LI, Ting, Ningde, Fujian 352100 (CN)
(74) Representative: Jacob, Reuben Ellis
(86) International application number: PCT/CN2023/083019
(87) International publication number: WO 2023/216727

(57) **Abstract**

The present disclosure provides an electrode assembly, a battery cell, a battery, and an electric device. The electrode assembly comprises an electrode assembly body and an end protection layer. The electrode assembly body comprises a positive electrode sheet body part, a negative electrode sheet body part, and a separator used for separating the positive electrode sheet body part from the negative electrode sheet body part. The separator protrudes outwards relative to the positive electrode sheet body part and the negative electrode sheet body part from two ends of the electrode assembly body along a first direction. A non-contact surface which is not in contact with the positive electrode sheet body part and the negative electrode sheet body part is provided at two ends of the separator in the first direction. The end protection layer is provided at two ends of the electrode assembly body in the first direction and forms an integrated structure with the electrode assembly body. The end protection layer comprises a separator coating part. The separator coating part covers at least part of the non-contact surface and is directly combined with the non-contact surface to form an integrated structure with the separator.

## Description

### Cross-Reference to Related Application

The present application claims priority to Chinese Patent Application No. 202221145650.1, entitled "ELECTRODE ASSEMBLY, BATTERY CELL, BATTERY, AND POWER CONSUMING DEVICE" and filed on May 13, 2022, which is incorporated herein by reference in its entirety.

### Technical Field

The present disclosure relates to the technical field of batteries, and in particular to an electrode assembly, a battery cell, a battery, and an electric device.

### Background Art

In a battery cell, an electrode assembly is a component in a battery cell where an electrochemical reaction occurs. The electrode assembly is mainly formed by winding or stacking a positive electrode plate, a negative electrode plate, and a separator for isolating (electrically insulating) the positive electrode plate from the negative electrode plate. The parts of the positive electrode plate and the negative electrode plate having an active material respectively constitute a positive electrode plate body portion and a negative electrode plate body portion, and the parts of the positive electrode plate and the negative electrode plate having no active material respectively constitute a positive electrode tab and a negative electrode tab.

In order to improve the heat resistance of the separator of the electrode assembly, a base film made of polyethylene, polypropylene, etc. is coated with a ceramic layer in the related art, but the ceramic layer is prone to delamination and chalking during use, which may cause safety problems.

### Summary of the Invention

An objective of the present disclosure is to provide an electrode assembly, a battery cell, a battery, and a power consuming device, which can improve the thermal stability of a separator compared with the related art, thereby improving the safety performance of the battery.

In a first aspect, the present disclosure provides an electrode assembly, including an electrode assembly body and end protective layers. The electrode assembly body includes a positive electrode plate body portion, a negative electrode plate body portion, and a separator for isolating the positive electrode plate body portion from the negative electrode plate body portion, the separator protruding outwards at two ends of the electrode assembly body in a first direction relative to the positive electrode plate body portion and the negative electrode plate body portion, and two ends of the separator in the first direction having non-contact surfaces that are not in contact with the positive electrode plate body portion or the negative electrode plate body portion. The end protective layers are arranged at the two ends of the electrode assembly body in the first direction and form an integral structure with the electrode assembly body, and the end protective layer includes a separator coating portion which covers at least part of the non-contact surface and is directly bonded to the non-contact surface to form an integral structure with the separator.

In the electrode assembly according to the present disclosure, the end protective layers are arranged at the two ends of the electrode assembly body in the first direction and form an integral structure with the electrode assembly body, and the end protective layer includes the separator coating portion which covers at least part of the non-contact surface and is directly bonded to the non-contact surface to form an integral structure with the separator. The separator coating portion can improve the mechanical strength and thermal stability of the portions (hereinafter also referred to as protruding portions) of the separator protruding outwards relative to the positive electrode plate body portion and the negative electrode plate body portion, because the separator coating portion can abut against the end face(s) of the positive electrode plate body portion and/or the negative electrode plate body portion in the first direction when the separator has a tendency to shrink inwards during use, which is conducive to preventing or reducing the inward shrinkage of the separator, thereby being also conducive to maintaining the thermal stability of the separator to maintain its performance of electrically insulating the positive electrode plate body portion from the negative electrode plate body portion, and also reducing the bending deformation or electrode plate misalignment of the electrode assembly after being loaded into a shell to improve the compactness of the electrode assembly, thereby improving the safety performance and energy density of a battery.

In the electrode assembly according to some embodiments, the end protective layer includes an inorganic coating layer or an organic-inorganic composite structure coating layer, the inorganic coating layer or the organic-inorganic composite structure coating layer forming an integral structure with the electrode assembly body.

The end protective layer includes the inorganic coating layer or the organic-inorganic composite structure coating layer that forms a uniform, compact, high-strength and small-thickness film, which is conducive to effectively strengthening the corresponding ends of the electrode assembly body portion, thereby being conducive to effectively preventing or reducing the inward shrinkage of the separator, so as to reduce the bending deformation or electrode plate misalignment of the electrode assembly after being loaded into a shell.

In the electrode assembly according to some embodiments, the inorganic coating layer or the organic-inorganic composite structure coating layer forms an integral structure by means of vapor deposition, spraying or sputtering.

Forming the inorganic coating layer or the organic-inorganic composite structure coating layer of an integral structure by means of vapor deposition, spraying or sputtering is conducive to forming a coating layer that is uniform, compact and highly integrated and can be firmly bonded to the surface of the electrode assembly body. For example, a nano-scale and micron-scale inorganic coating layer or organic-inorganic composite structure coating layer may be formed by means of vapor deposition, which is conducive to forming a film that is more uniform, compact, high-strength and small-thickness, which facilitates firm integration of the inorganic coating layer or the organic-inorganic composite structure coating layer with the corresponding parts of the electrode assembly body portion to effectively improve the strength of the protruding portions of the separator, and which is more conducive to preventing the separator from shrinking inwards, so as to reduce the bending deformation or electrode plate misalignment of the electrode assembly after being loaded into a shell.

In the electrode assembly according to some embodiments, all the non-contact surfaces are provided with a separator coating portion.

All the non-contact surfaces being provided with the separator coating portion is more conducive to strengthening the protruding portions of the separator, so as to prevent the separator from shrinking inwards, reducing the bending deformation or electrode plate misalignment of the electrode assembly after being loaded into a shell.

In the electrode assembly according to some embodiments, the separator is provided with a reinforcing layer at the non-contact surface on which the separator coating portion is provided, and the reinforcing layer is formed by distributing a material of the separator coating portion from the non-contact surface to an inner side of the separator.

In a process of forming the separator coating portion, the distribution of the material of the separator coating portion to the inner side of the separator to form the reinforcing layer is conducive to improving the mechanical strength and thermal stability of the protruding portions of the separator to achieve firmer bonding of the separator coating portion to the separator, thereby being more conducive to preventing the separator from shrinking inwards, so as to reduce the bending deformation or electrode plate misalignment of the electrode assembly after being loaded into a shell.

In the electrode assembly according to some embodiments, the separator coating portions that cover at least part of the non-contact surfaces at the same end of at least part of the adjacent separators join with each other.

Since the separators are made of a soft material, the protruding portions of the adjacent separators at the same end of the electrode assembly may have a small gap in whole or in part or even join with each other, and with this arrangement, the separator coating portions of the parts of the adjacent separators that have a small gap in part or join with each other form one piece, so as to provide overall protection for the parts of the adjacent separators that have a small gap in part or join with each other, which, on the one hand, improves the strength of the separators, and, on the other hand, protects the end faces of the positive electrode plate body portion or the negative electrode plate body portion on the inner sides of the adjacent separators, thereby being conducive to preventing the separators from shrinking inwards, so as to reduce the bending deformation or electrode plate misalignment of the electrode assembly after being loaded into a shell.

In the electrode assembly according to some embodiments, the end protective layer further includes: a positive electrode coating portion, which covers at least part of surfaces of the two end faces of the positive electrode plate body portion in the first direction and forms an integral structure with the positive electrode plate body portion; and/or a negative electrode coating portion, which covers at least part of surfaces of the two end faces of the negative electrode plate body portion in the first direction and forms an integral structure with the negative electrode plate body portion.

In addition to the separator coating portion, the end protective layer further includes the positive electrode coating portion and/or the negative electrode coating portion, such that the electrode assembly has better structural stability, which is conducive to reducing the bending deformation or electrode plate misalignment of the electrode assembly after being loaded into a shell.

In the electrode assembly according to some embodiments, the separator coating portion joins with the positive electrode coating portion and/or the negative electrode coating portion.

Since the separator coating portion joins with the positive electrode coating portion and/or the negative electrode coating portion, the electrode assembly has better structural stability, which further improves the thermal stability of the separator, so as to reduce the bending deformation or electrode plate misalignment of the electrode assembly after being loaded into a shell.

In the electrode assembly according to some embodiments, the end protective layer covers the whole surfaces of the two end faces of the positive electrode plate body portion in the first direction; and/or the end protective layer covers the whole surfaces of the two end faces of the negative electrode plate body portion in the first direction.

Since the end protective layer covers the whole surfaces of the two end faces of the positive electrode plate body portion in the first direction, and/or the end protective layer covers the whole surfaces of the two end faces of the negative electrode plate body portion in the first direction, the electrode assembly has better structural stability, thereby being conducive to reducing the bending deformation or electrode plate misalignment of the electrode assembly after being loaded into a shell.

In the electrode assembly according to some embodiments, the end protective layer has a thickness of 0.01 µm to 100 µm.

In the electrode assembly according to some embodiments, the end protective layer has a thickness of 0.05 µm to 5 µm.

The reasonable setting of the thickness of the end protective layer can not only effectively protect the electrode assembly body, but also avoid the waste of the materials and processing time, thereby reducing the production cost and improving the production efficiency.

In a second aspect, the present disclosure provides a battery cell including an electrode assembly as described in the first aspect of the present disclosure. The battery cell according to the present disclosure has the advantages of the electrode assembly according to the present disclosure.

In a third aspect, the present disclosure provides a battery including a battery cell as described in the second aspect of the present disclosure. The battery according to the present disclosure has the advantages of the battery cell according to the present disclosure.

In a fourth aspect, the present disclosure provides a power consuming device including a battery as described in the third aspect of the present disclosure, the battery being configured to power the power consuming device. The power consuming device according to the present disclosure has the advantages of the battery according to the present disclosure.

Other features and advantages of the present disclosure will become apparent from the following detailed description of exemplary embodiments of the present disclosure with reference to the drawings.

### Brief Description of the Drawings

The drawings described herein are intended to provide further understanding of the present disclosure, which constitutes a part of the present disclosure. The illustrative embodiments of the present disclosure and the description thereof are intended to explain the present disclosure, and do not constitute an undue limitation on the present disclosure. In the drawings:
FIG. 1 is a schematic structural diagram of a vehicle as a power consuming device according to an embodiment of the present disclosure.
FIG. 2 is a schematic structural diagram of a battery according to an embodiment of the present disclosure.
FIG. 3 is a schematic exploded structural diagram of a battery cell in a battery according to an embodiment of the present disclosure.
FIG. 4 is a schematic structural diagram of an electrode assembly according to an embodiments of the present disclosure.
FIG. 5 is a schematic enlarged structural diagram of part E of the electrode assembly according to the embodiment shown in FIG. 4.
FIG. 6 is a schematic structural diagram of an electrode assembly according to an embodiments of the present disclosure.
FIG. 7 is a schematic structural diagram of an electrode assembly according to an embodiments of the present disclosure.

In the accompanying drawings, the figures are not drawn to scale.

### Detailed Description of Embodiments

The technical solutions in the embodiments of the present disclosure will now be described clearly and fully below with reference to the drawings in the embodiments of the present disclosure. Apparently, the embodiments as described are only some of, rather than all of, the embodiments of the present disclosure. The following description of at least one exemplary embodiment is illustrative only in fact, and is in no way intended to limit the present disclosure and the application or use thereof. All other embodiments obtained by those of ordinary skill in the art based on the embodiments of the present disclosure without creative efforts shall fall within the protection scope of the present disclosure.

Relative arrangements, numerical expressions, and numerical values of components and steps set forth in these embodiments do not limit the scope of the present disclosure, unless otherwise specifically stated. Meanwhile, it should be understood that, for ease of description, the dimensions of various parts shown in the drawings are not drawn to scale. Technologies, methods, and devices known to those of ordinary skill in the related art may not be discussed in detail, but where appropriate, the technologies, methods, and devices should be considered as part of the authorized specification. In all examples shown and discussed herein, any specific value should be construed as illustration only, instead of limitation. Therefore, there may be different values in other examples of exemplary embodiments. It should be noted that similar reference numerals and letters represent similar items in the following figures. Therefore, once an item is defined in one figure, the item does not need to be further discussed in subsequent figures.

In the description of the present disclosure, it should be understood that the terms such as "first" and "second" are merely for the ease of distinguishing the corresponding components. Unless otherwise stated, the above terms have no special meaning, and therefore cannot be construed as limiting the scope of protection of the present disclosure.

In the description of the present disclosure, it should be noted that "a plurality of' means two or more, unless otherwise specified. The orientation or position relationship indicated by the terms "upper", "lower", "left", "right", "inner", "outer", etc. is only for the ease of describing the present disclosure and simplifying the description, rather than indicating or implying that the apparatus or element referred to must have a particular orientation or be constructed and operated in a particular orientation, and therefore should not be construed as a limitation on the present disclosure. In addition, the terms such as "first", "second" and "third" are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the drawings, and do not limit the specific structure in the present disclosure. In the description of the present disclosure, it should be further noted that unless otherwise explicitly specified and defined, the terms "mounting", "connecting" and "connection" should be understood in a broad sense. For example, the connection may be a fixed connection, a detachable connection, or an integrated connection; or may be a direct connection, or may be an indirect connection by means of an intermediate medium. For those of ordinary skill in the art, the specific meanings of the above terms in the present disclosure can be understood according to specific circumstances.

According to the present disclosure, the battery cell may include a lithium-ion secondary battery, a lithium-ion primary battery, a lithium-sulfur battery, a sodium/lithium-ion battery, a sodium-ion battery or a magnesium-ion battery, etc., which will not be limited in embodiments of the present disclosure. The battery cell may be cylindrical, flat, cuboid or in another shape, which will not be limited by the embodiments of the present disclosure. The battery cells are generally classified into three types depending on the way of package: cylindrical battery cells, prismatic battery cells and pouch battery cells, which will also not be limited in the embodiments of the present disclosure.

A battery mentioned in the embodiments of the present disclosure refers to a single physical module including one or more battery cells to provide a higher voltage and capacity. For example, the battery mentioned in the present disclosure may include a battery module, a battery pack, etc. The battery generally includes a case for packaging one or more battery cells. The case can prevent liquid or other foreign matters from affecting charging or discharging of the battery cell(s).

The battery cell mainly includes a cell, a shell and an end cap assembly. The cell may include one or two or more electrode assemblies. The cell is packaged in an accommodation space of the shell by means of an end cap of the end cap assembly, and the accommodation space is filled with an electrolyte.

The shell is a component for providing the accommodation space in which the electrode assembly, the electrolyte and other components are accommodated. The shell may be of various shapes and sizes, such as rectangle, cylinder and hexagonal prism. Specifically, the shape of the shell may be determined according to the specific shape and size of the electrode assembly. The shell may be made of copper, iron, aluminum, stainless steel, aluminum alloy, plastic, etc.

The end cap refers to a component that covers an opening of the shell to isolate an internal environment of the battery cell from an external environment. The end cap may be shaped to adapt to the shape of the shell so as to fit with the shell. Optionally, the end cap may be made of a material having certain hardness and strength (such as aluminum alloy). In this way, the end cap is less likely to deform when subj ected to compression and collision, such that the battery cell can have a higher structural strength and also have improved safety performance. Functional components, such as electrode terminals, may be provided on the end cap. The electrode terminals may be configured to be electrically connected to the electrode assembly for the output or input of electric energy of the battery cell. In some embodiments, the end cap may be further provided with a pressure relief mechanism which is configured to release the internal pressure when the internal pressure or temperature of the battery cell reaches a threshold. The pressure relief mechanism is an explosion-proof valve, for example.

The shell and the end cap may be independent components, and the shell is provided with an opening where the end cap covers the opening of the end cap to form an internal environment of the battery cell. Without limitation, the end cap and the shell may also be integrated. Specifically, the end cap and the shell may first form a common connecting face before other components are loaded into a shell, and then when the interior of the shell needs to be enclosed, the end cap covers the shell, and the shell and the end cap are assembled together.

In the battery cell according to some embodiments, an insulating member may also be provided on an inner side of the end cap. The insulating member can be configured to isolate an electrical connection component in the shell from the end cap, so as to reduce the risk of a short circuit. Exemplarily, the insulating member may be an insulating plate, and may be made of plastic, rubber or other materials.

The electrode assembly is arranged in the accommodation space of the shell. In a battery cell, an electrode assembly is a component in a battery cell where an electrochemical reaction occurs. The electrode assembly includes a positive electrode plate, a negative electrode plate, and a separator. The operation of the battery cell mainly relies on the movement of metal ions between the positive electrode plate and the negative electrode plate. The positive electrode plate includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium ion battery as an example, the positive electrode current collector may be made of aluminum, and the positive electrode active material may be lithium cobalt oxide, lithium iron phosphate, ternary lithium, lithium manganate, etc. The negative electrode plate includes a negative electrode current collector and a negative electrode active material layer. A surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer serves as a negative electrode tab. The negative electrode current collector may be made of copper, and the negative electrode active material may be carbon, silicon, etc. In order to ensure that no fusing occurs when a large current passes, a plurality of positive electrode tabs are provided and are stacked together, and a plurality of negative electrode tabs are provided and are stacked together. The separator may be made of polypropylene (PP), polyethylene (PE), etc.

In the related art, in order to improve the heat resistance of the separator, a ceramic coating is usually applied to a base film of the separator. The inventors found that a ceramic layer, especially a ceramic layer protruding from the separator of the electrode plate, will be subjected to delamination, cracking or chalking due to collision, impact, etc. during actual use, such that when the temperature in the battery cell rises, the region of the separator where the ceramic layer is delaminated is still prone to significant shrinkage, causing the positive electrode plate and the negative electrode plate to overlap each other and in turn causing a short circuit or fire.

The inventors of the present disclosure proposed an electrode assembly, which, compared with the above related art, is provided with end protective layers. When the temperature in the battery cell using the electrode assembly is high, the end protective layer can enhance the heat resistance of the portion of the separator that is not in contact with the positive electrode plate and/or the negative electrode plate, so as to inhibit shrinkage of the separator to a certain extent, thereby improving the safety performance of the battery cell. Moreover, the end protective layer has a relatively small thickness, and thus may not have much affection on the energy density of the battery cell. Further, the present disclosure further provides a battery cell including an electrode assembly according to the present disclosure, a battery including a battery cell according to the present disclosure, and a power consuming device including a battery according to the present disclosure.

The technical solutions described in the embodiments of the present application are applicable to a battery and a power consuming device using the battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The power consuming devices described above are not specially limited in the embodiments of the present application.

The implementations of the present disclosure will be further described in detail below with reference to the accompanying drawings and embodiments. The following detailed description of the embodiments and the accompanying drawings are used to illustrate the principle of the present disclosure by way of example, but are not intended to limit the scope of the present disclosure. That is, the present disclosure is not limited to the described embodiments.

For ease of description, an example in which a power consuming device according to some embodiments of the present disclosure is a vehicle D is taken for description.

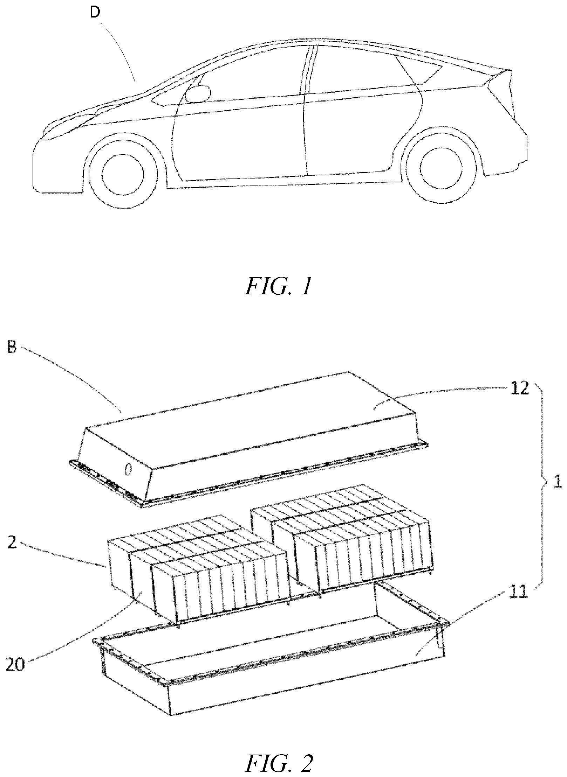

The reference is made to FIG. 1. FIG. 1 is a schematic structural diagram of a vehicle D according to some embodiments of the present disclosure. The vehicle D may be a fuel vehicle, a gas vehicle or a new energy vehicle. The new energy vehicle may be a battery electric vehicle, a hybrid electric vehicle, an extended-range vehicle, etc. A battery B is provided inside the vehicle D, and the battery B may be arranged at the bottom, the front or the back of the vehicle D. The battery B may be configured to power the vehicle D, for example, as an operating power supply for the vehicle D.

In some embodiments of the present disclosure, the battery B can not only serve as an operating power supply for the vehicle D, but also serve as a driving power supply for the vehicle D, in place of or partially in place of fuel or natural gas, to provide driving power for the vehicle D.

Reference is made to FIG. 2. FIG. 2 is an exploded view of the battery B according to some embodiments of the present disclosure.

The battery B includes a case 1 and a battery cell 20 accommodated in the case 1. The case 1 includes a case shell 11 and a case cover 12 snap-fitted to the case shell 11, and the case 1 is configured to provide an accommodation space for the battery cell 20. In the above embodiments, the case 1 is a cuboid as a whole. In the embodiments not shown, the case 1 may also be in other shapes, such as a cylinder.

In the battery B, a plurality of battery cells 20 may be provided, and the plurality of battery cells 20 may be in series connection, in parallel connection or in series-parallel connection. The series-parallel connection means that some of the plurality of battery cells 20 are in series connection and some are in parallel connection. The plurality of battery cells 20 may be directly combined together in series connection, in parallel connection or in series-parallel connection, and then a unit consisting of the plurality of battery cells 20 is accommodated in the case 1.

As shown in FIG. 2, in the battery B, a plurality of battery cells 20 are in series connection or in parallel connection or in series-parallel connection to form a battery module 2. A plurality of battery modules 2 are then in series connection or in parallel connection or in series-parallel connection to form a unit and are accommodated in the case 1. The battery B may further include other structures. For example, the battery B may further include a busbar component configured to achieve electrical connection between the plurality of battery cells 20.

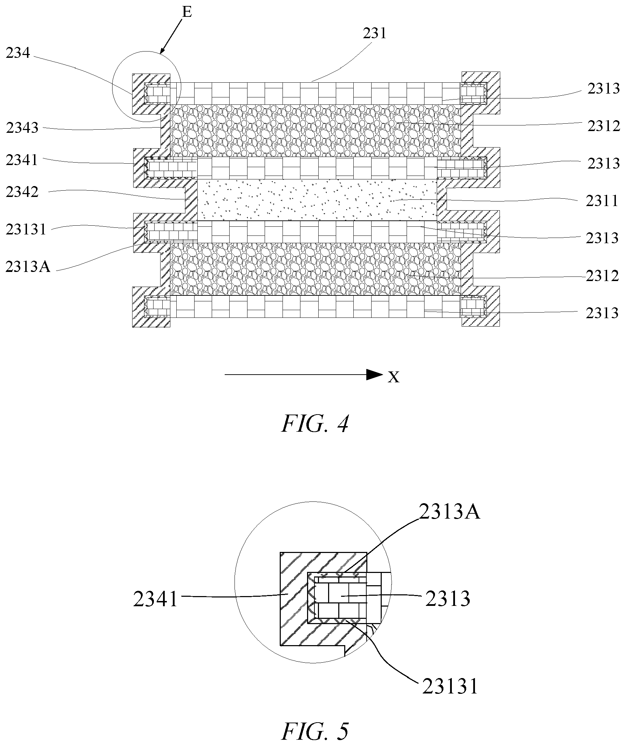

As shown in FIGS. 4 to 7, the embodiments of the present disclosure provide an electrode assembly 23, including an electrode assembly body 231 and end protective layers 234. The electrode assembly body 231 includes a positive electrode plate body portion 2311, a negative electrode plate body portion 2312, and a separator 2313 for isolating the positive electrode plate body portion 2311 from the negative electrode plate body portion 2312. At two ends of the electrode assembly body 231 in a first direction X (corresponding to a left-right direction in FIGS. 4, 6 and 7), the separator 2313 protrudes outwards relative to the positive electrode plate body portions 2311 and the negative electrode plate body portions 2312. Two ends of the separator 2313 in the first direction X have non-contact surfaces 2313A not in contact with the positive electrode plate body portion 2311 or the negative electrode plate body portion 2312. The end protective layers 234 are arranged at the two ends of the electrode assembly body 231 in the first direction X and form an integral structure with the electrode assembly body 231. The end protective layer 234 includes a separator coating portion 2341. The separator coating portion 2341 covers at least part of the non-contact surface 2313A and is directly bonded to the non-contact surface 2313A to form an integral structure with the separator 2313.

Optionally, the direct bonding may be achieved, for example, by directly growing on the separator 2313 by means of vapor deposition, etc., rather than indirect bonding by means of gluing, etc., so as to ensure the strength of bonding between the separator coating layer 2341 and the separator 2313.

The electrode assembly 23 may be of a winding structure. The positive electrode plate, the separator and the negative electrode plate, which are tape-shaped, are sequentially stacked and wound for more than two circles to form the electrode assembly 23, and the electrode assembly 23 may be flat. In a process of making the electrode assembly 23, the electrode assembly 23 may be directly wound into a flat shape such that the electrode assembly 23 is substantially of a hexahedral structure, or the electrode assembly may be first wound into a hollow cylindrical structure and then flattened into a flat shape after being wound. The flat surface is substantially parallel to a winding axis and is the outer surface with the largest area. The flat surface may be a relatively flat surface and does not need to be purely planar.

The electrode assembly 23 may also be of a laminated structure, that is, the electrode assembly 23 includes a plurality of positive electrode plates and a plurality of negative electrode plates, and the separators are provided between the positive electrode plates and the negative electrode plates. The positive electrode plates and the negative electrode plates are stacked.

In the electrode assembly 23 according to the embodiments of the present disclosure, the end protective layers 234 are arranged at the two ends of the electrode assembly body 231 in the first direction X and form an integral structure with the electrode assembly body 231. The end protective layer 234 includes the separator coating portions 2341, and each separator coating portion 2341 covers at least part of the non-contact surface 2313A and is directly bonded to the non-contact surface 2313A to form an integral structure with the separator 2313. The separator coating portion 2341 can improve the mechanical strength and thermal stability of the protruding portion of the separator 2313, because when the separator has a tendency to shrink inwards during use, the separator coating portion 2341 can abut against the end face(s) of the positive electrode plate body portion 2311 and/or the negative electrode plate body portion 2312 in the first direction X, which is conducive to preventing or reducing the inward shrinkage of the separator 2313, thereby being conducive to maintaining the thermal stability of the separator to maintain its performance of electrically insulating the positive electrode plate body portion 2311 from the negative electrode plate body portion 2312, and also reducing the bending deformation or electrode plate misalignment of the electrode assembly 23 after being loaded into a shell to improve the compactness of the electrode assembly 23, thereby improving the safety performance and energy density of the battery using the electrode assembly 23.

Since the separator coating portion 2341 can prevent or reduce the inward shrinkage of the separator 2313, it is not necessary to provide a ceramic layer on a surface of the separator that is in contact with the positive electrode plate body portion and the negative electrode plate body portion, which can reduce the size of the electrode assembly 23, reduce the weight of the electrode assembly 23, and reduce the cost of the electrode assembly 23, and is conducive to improving the energy density of a battery where the electrode assembly 23 is located.

Providing the separator coating portion 2341 on the protruding portion of the separator having a ceramic layer in the related art to achieve further protection is conducive to preventing or reducing delamination, cracking, etc. of the ceramic layer on the protruding portion of the separator in the related art, and is also conducive to improving the mechanical strength and thermal stability of the protruding portion of the separator 2313, thereby improving the safety performance of the battery using the electrode assembly.

The first direction X in the embodiments shown in FIGS. 4, 6 and 7 is the left-right direction in FIGS. 4, 6 and 7.

In the electrode assembly 23 according to some embodiments, the end protective layer 234 includes an inorganic coating layer or an organic-inorganic composite structure coating layer, the inorganic coating layer or the organic-inorganic composite structure coating layer forming an integral structure with the electrode assembly body 231.

The end protective layer 234 includes the inorganic coating layer or the organic-inorganic composite structure coating layer that forms a uniform, compact, high-strength and small-thickness film, which is conducive to effectively strengthening the corresponding ends of the electrode assembly body portion 231, thereby being conducive to effectively preventing or reducing the inward shrinkage of the separator 2313, so as to reduce the bending deformation or electrode plate misalignment of the electrode assembly 23 after being loaded into a shell.

The inorganic coating layer may be, for example, made of at least one of alumina, silica, zirconium oxide, hafnium oxide, titanium oxide, magnesium oxide, zinc oxide, boehmite, aluminum hydroxide, magnesium hydroxide and lithium fluoride.

The organic-inorganic composite structure coating layer may be formed by means of organic-inorganic hybridization, or may also be provided in layers. In the case where the organic-inorganic composite structure coating layer is provided in layers, the coating layer may be composed of a single organic coating layer and a single inorganic coating layer, composed of a single organic coating layer and a plurality of inorganic coating layers, composed of a plurality of organic coating layers and a single inorganic coating layer, or composed of a plurality of organic coating layers and a plurality of inorganic coating layers. In the case where the organic-inorganic composite structure coating layer includes a plurality of organic coating layers, the organic coating layers may be made of the same or different materials; and in the case where the organic-inorganic composite structure coating layer includes a plurality of inorganic coating layers, the plurality of inorganic coating layers may be made of the same or different materials.

In the electrode assembly 23 according to some embodiments, the inorganic coating layer or the organic-inorganic composite structure coating layer forms an integral structure by means of vapor deposition, spraying or sputtering.

Forming the inorganic coating layer or the organic-inorganic composite structure coating layer of an integral structure by means of vapor deposition, spraying or sputtering is conducive to forming a coating layer that is uniform, compact and highly integrated and can be firmly bonded to the surface of the electrode assembly body 231. For example, a nano-scale and micron-scale inorganic coating layer or organic-inorganic composite structure coating layer may be formed by means of vapor deposition, which is conducive to forming a film that is more uniform, compact, high-strength and small-thickness to facilitate firm integration of the inorganic coating layer or the organic-inorganic composite structure coating layer with the corresponding parts of the electrode assembly body portion 231, effectively improving the strength of the protruding portion of the separator 2313, and which is more conducive to preventing the separator from shrinking inwards, so as to reduce the bending deformation or electrode plate misalignment of the electrode assembly 23 after being loaded into a shell.

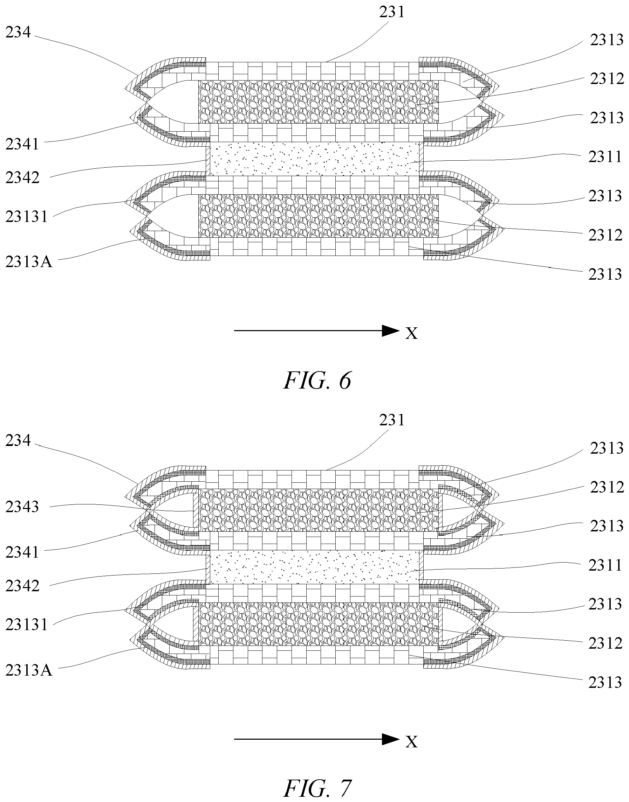

As shown in FIGS. 4 and 7, in the electrode assembly 23 according to some embodiments, all the non-contact surface 2313A are provided with a separator coating portion 2341.

All the non-contact surfaces 2313A being provided with the separator coating portions 2341 is more conducive to strengthening the protruding portions of the separator 2313, so as to prevent the separator from shrinking inwards, reducing the bending deformation or electrode plate misalignment of the electrode assembly 23 after being loaded into a shell.

As shown in FIGS. 4 to 7, in the electrode assembly 23 according to some embodiments, the separator 2313 is provided with a reinforcing layer 23131 at the non-contact surface 2313A on which the separator coating portion 2341 is provided, and the reinforcing layer 23131 is formed by distributing a material of the separator coating portion 2341 from the non-contact surface 2313A to an inner side of the separator 2313.

In a process of forming the separator coating portion 2341, the distribution of the material of the separator coating portion 2341 to the inner side of the separator 2312 to form the reinforcing layer 23131 is conducive to improving the mechanical strength and thermal stability of the protruding portion of the separator 2313 to achieve firmer bonding of the separator coating portion 2341 to the separator 2312, thereby being more conducive to preventing the separator from shrinking inwards, so as to reduce the bending deformation or electrode plate misalignment of the electrode assembly 23 after being loaded into a shell.

As shown in FIG. 6, in the electrode assembly 23 according to some embodiments, the separator coating portions 2341 that cover at least part of the non-contact surfaces 2313A at the same end of at least part of the adjacent separators 2313 join with each other.

Since the separators 2313 are made of a soft material, the protruding portions of the adjacent separators 2313 at the same end of the electrode assembly 23 may have a small gap in whole or in part or even join with each other, and with this arrangement, the separator coating portions 2341 of the parts of the adjacent separators 2313 that have a small gap in part or join with each other form one piece, so as to provide overall protection for the parts of the adjacent separators 2313 that have a small gap in part or join with each other, which, on the one hand, improves the strength of the separators 2313, and, on the other hand, protects the end faces of the positive electrode plate body portion 2311 or the negative electrode plate body portion 2312 on the inner sides of the adjacent separators 2313, thereby being conducive to preventing the separators from shrinking inwards, so as to reduce the bending deformation or electrode plate misalignment of the electrode assembly 23 after being loaded into a shell.

As shown in FIGS. 4 to 7, in the electrode assembly 23 according to some embodiments, the end protective layer 234 further includes: a positive electrode coating portion 2342, the positive electrode coating portion 2342 covering at least part of surfaces of the two end faces of the positive electrode plate body portion 2311 in the first direction X and forming an integral structure with the positive electrode plate body portion 2311; and/or a negative electrode coating portion 2343, the negative electrode coating portion 2343 covering at least part of surfaces of the two end faces of the negative electrode plate body portion 2312 in the first direction X and forming an integral structure with the negative electrode plate body portion 2312.

In addition to the separator coating portion 2341, the end protective layer 234 further includes the positive electrode coating portion 2342 and/or the negative electrode coating portion 2343, such that the electrode assembly 23 has better structural stability, which is conducive to reducing the bending deformation or electrode plate misalignment of the electrode assembly 23 after being loaded into a shell.

As shown in FIGS. 4 to 7, in the electrode assembly 23 according to some embodiments, the separator coating portion 2341 joins with the positive electrode coating portion 2342 and/or the negative electrode coating portion 2343.

Since the separator coating portion 2341 joins with the positive electrode coating portion 2342 and/or the negative electrode coating portion 2343, the electrode assembly 23 has better structural stability, which further improves the thermal stability of the separator, so as to reduce the bending deformation or electrode plate misalignment of the electrode assembly after being loaded into a shell.

As shown in FIGS. 4 to 7, in the electrode assembly 23 according to some embodiments, the end protective layer 234 covers the whole surfaces of the two end faces of the positive electrode plate body portion 2311 in the first direction X; and/or the end protective layer 234 covers the whole surfaces of the two end faces of the negative electrode plate body portion 2312 in the first direction X.

Since the end protective layer 234 covers the whole surfaces of the two end faces of the positive electrode plate body portion 2311 in the first direction X, and/or the end protective layer 234 covers the whole surfaces of the two end faces of the negative electrode plate body portion 2312 in the first direction X, the electrode assembly 23 has better structural stability, thereby being conducive to reducing the bending deformation or electrode plate misalignment of the electrode assembly after being loaded into a shell.

In the electrode assembly 23 according to some embodiments, the end protective layer 234 has a thickness of 0.01 µm to 100 µm. In the electrode assembly 23 according to some embodiments, the end protective layer 234 has a thickness of 0.05 µm to 5 µm.

The reasonable setting of the thickness of the end protective layer 234 can not only effectively protect the electrode assembly body 231, but also avoid the waste of the materials and processing time, thereby reducing the production cost and improving the production efficiency.

A battery cell provided by the embodiments of the present disclosure includes the electrode assembly 23 according to the embodiments of the present disclosure. The battery cell according to the embodiments of the present disclosure has the advantages of the electrode assembly 23 according to the embodiments of the present disclosure.

A battery provided by the embodiments of the present disclosure includes the battery cell according to the embodiments of the present disclosure. The battery according to the embodiments of the present disclosure has the advantages of the battery cell according to the embodiments of the present disclosure.

A power consuming device provided by the embodiments of the present disclosure includes the battery according to the embodiments of the present disclosure, the battery being configured to power the power consuming device. The power consuming device according to the embodiments of the present disclosure has the advantages of the battery according to the embodiments of the present disclosure.

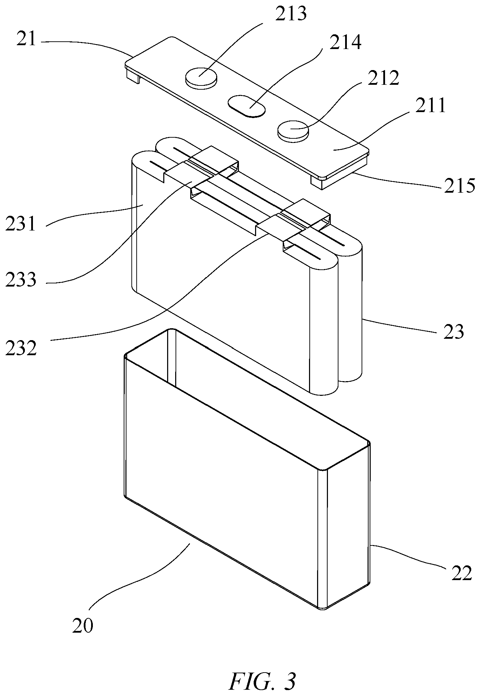

The structures of an electrode assembly 23 and the battery cell 20 in which the electrode assembly 23 is located according to some embodiments of the present disclosure are described below with reference to FIGS. 3 to 7.

As shown in FIG. 3, the battery cell 20 includes an end cap assembly 21, a shell 22, and two electrode assemblies 23.

The end cap assembly 21 includes an end cap 211, a first electrode terminal 212, a second electrode terminal 213, an explosion-proof valve 214 and an insulating plate 215. The end cap 211 is configured to fit with the shell 22 to package the electrode assembly 23 in a closed accommodation space that is formed by the end cap 211 and the shell 22. The first electrode terminal 212 is a positive electrode terminal; and The second electrode terminal 213 is a negative electrode terminal. The positive electrode terminal and the negative electrode terminal may be respectively electrically connected to a positive electrode tab 232 and a negative electrode tab 233 of the corresponding electrode assembly 23 by means of connecting sheets (not shown). The insulating plate 215 is arranged between the end cap 211 and the connecting sheet to achieve insulation between the end cap 211 and the electrode assemblies.

With reference to FIGS. 3 to 7, the electrode assembly 23 includes the electrode assembly body 231, the positive electrode tab 232, the negative electrode tab 233 and the end protective layer 234.

As shown in FIG. 4, the electrode assembly body 231 includes the positive electrode plate body portion 2311, the negative electrode plate body portion 2312 and the separator 2313. The separator 2313 is configured to isolate and electrically insulate the positive electrode plate body portion 2311 from the negative electrode plate body portion 2312. The separator 2313 is arranged between the positive electrode plate body portion 2311 and the negative electrode plate body portion 2312 or on the outermost side of the stacked electrode plates and separators. The positive electrode plate body portion 2311 and the negative electrode plate body portion 2312 are respectively parts of the positive electrode plate and the negative electrode plate that are coated with active materials. The positive electrode tab 232 and the negative electrode tab 233 are respectively parts of the positive electrode plate and the negative electrode plate that are not coated with active materials.

As shown in FIG. 4, at the two ends of the electrode assembly body 231 in the first direction X, the separator 2313 protrudes outwards relative to the positive electrode plate body portion 2311 and the negative electrode plate body portion 2312. Two ends of the separator 2313 in the first direction X have non-contact surfaces 2313A not in contact with the positive electrode plate body portion 2311 or the negative electrode plate body portion 2312.

As shown in FIG. 4, the end protective layers 234 are arranged at the two ends of the electrode assembly body 231 in the first direction X and form an integral structure with the electrode assembly body 231. The end protective layer 234 includes a separator coating portion 2341. The separator coating portion 2341 covers at least part of the non-contact surface 2313A and forms an integral structure with the separator 2313.

The end protective layer 234 includes an inorganic coating layer which forms an integral structure with the electrode assembly body 231. The inorganic coating layer forms an integral structure by means of vapor deposition while forming an integral structure with the electrode assembly body 231.

In the electrode assembly 23 as shown in FIG. 4, all the non-contact surface 2313A are provided with a separator coating portion 2341.

As shown in FIGS. 4 and 5, the separator 2313 is provided with a reinforcing layer 23131 at the non-contact surface 2313A on which the separator coating portion 2341 is provided. The reinforcing layer 23131 is formed by distributing a material of the separator coating portion 2341 from the non-contact surface 2313A to an inner side of the separator 2313. The reinforcing layer 23131 may be formed, for example, by means of permeation of feed gas of vapor deposition into the inside of the separator 2313 during the process of forming the inorganic coating layer by means of vapor deposition.

In the electrode assembly 23 as shown in FIG. 4, the end protective layer 234 further includes a positive electrode coating portion 2342 and a negative electrode coating portion 2343. The positive electrode coating portion 2342 covers the two end faces of the positive electrode plate body portion 2311 in the first direction X and forms an integral structure with the positive electrode plate body portion 2311. The negative electrode coating portion 2343 covers the two end faces of the negative electrode plate body portion 2312 in the first direction X and forms an integral structure with the negative electrode plate body portion 2312.

In the electrode assembly 23 as shown in FIG. 4, the separator coating portion 2341 joins with both of the positive electrode coating portion 2342 and the negative electrode coating portion 2343.

In the electrode assembly 23 as shown in FIG. 4, the end protective layers 234 cover the whole surfaces of the two end faces of the positive electrode plate body portion 2311 in the first direction X and the whole surfaces of the two end faces of the negative electrode plate body portion 2312 in the first direction X.

The end protective layer 234 has a thickness of 1 µm.

The main difference between the electrode assembly 23 shown in FIG. 6 and the electrode assembly 23 shown in FIGS. 4 and 5 is described as below.

In the electrode assembly 23 as shown in FIG. 6, the separator coating portions 2341 that cover at least part of the non-contact surfaces 2313A at the same end of at least part of the adjacent separators 2313 join with each other. The end protective layer 234 includes the positive electrode coating portion 2342. The positive electrode coating portion 2342 covers the two end faces of the positive electrode plate body portion 2311 in the first direction X and forms an integral structure with the positive electrode plate body portion 2311. The separator coating portion 2341 joins with the positive electrode coating portion 2342. The end protective layer 234 covers the whole surfaces of the two end faces of the positive electrode plate body portion 2311 in the first direction X. The two end faces of the negative electrode plate body portion 2321 in the first direction X are shielded by ends of the two separators 2313 on two sides of the negative electrode plate body portion and thus are not coated with the end protective layers.

For any part not illustrated in the embodiment shown in FIG. 6, the reference can be made to the relevant content of the embodiment shown in FIGS. 4 and 5.

The main difference between the electrode assembly 23 shown in FIG. 7 and the electrode assembly 23 shown in FIGS. 4 and 5 is described as below. In the electrode assembly 23 as shown in FIG. 7, the separator coating portions 2341 that cover at least part of the non-contact surfaces 2313A at the same end of at least part of the adjacent separators 2313 join with each other.

As shown in FIG. 7, the end protective layer 234 includes a positive electrode coating portion 2342 and a negative electrode coating portion 2343. The positive electrode coating portion 2342 covers the two end faces of the positive electrode plate body portion 2311 in the first direction X and forms an integral structure with the positive electrode plate body portion 2311. The negative electrode coating portion 2343 covers the two end faces of the negative electrode plate body portion 2312 in the first direction X and forms an integral structure with the negative electrode plate body portion 2312. The separator coating portion 2341 joins with the positive electrode coating portion 2342 and the negative electrode coating portion 2342. The end protective layer 234 covers the whole surfaces of the two end faces of the positive electrode plate body portion 2311 in the first direction X.

It should be noted that FIGS. 4 to 7 respectively show cross-sectional structures of a cross-section of some layers (one positive electrode plate body portion, one negative electrode plate body portion and one separator may be referred to as one layer) of the electrode assembly 23. In some embodiments, it may also be possible that the layers of a part of the same electrode assembly 23 are of the structure shown in FIG. 4, and the layers of the other part are of the structure shown in FIGS. 6 and/or 7. In other embodiments, it may also be possible that the layers of the same part of the same electrode assembly 23 may have various cross-sections respectively of the structures shown in FIGS. 4 to 7, etc.

Finally, it should be noted that the foregoing embodiments are merely used for illustrating rather than limiting the technical solutions of the present disclosure. Although the present disclosure has been illustrated in detail with reference to the preferred embodiments, it should be understood by those of ordinary skill in the art that the specific embodiments of the present disclosure can still be modified or some of the technical features can be equivalently substituted, which should be fall within the scope of the technical solutions recited in the present disclosure.

## Claims

1. An electrode assembly (23), comprising:
an electrode assembly body (231), the electrode assembly body (231) comprising a positive electrode plate body portion (2311), a negative electrode plate body portion (2312), and a separator (2313) for isolating the positive electrode plate body portion (2311) from the negative electrode plate body portion (2312), the separator protruding outwards at two ends of the electrode assembly body (231) in a first direction (X) relative to the positive electrode plate body portion (2311) and the negative electrode plate body portion (2312), and two ends of the separator (2313) in the first direction (X) having non-contact surfaces (2313A) that are not in contact with the positive electrode plate body portion (2311) or the negative electrode plate body portion (2312); and
end protective layers (234), the end protective layers (234) being arranged at the two ends of the electrode assembly body (231) in the first direction (X) and forming an integral structure with the electrode assembly body (231), the end protective layer (234) comprising a separator coating portion (2341), and the separator coating portion (2341) covering at least part of the non-contact surface (2313A) and being directly bonded to the non-contact surface (2313A) to form an integral structure with the separator (2313).

2. The electrode assembly (23) according to claim 1, wherein the end protective layer (234) comprises an inorganic coating layer or an organic-inorganic composite structure coating layer, the inorganic coating layer or the organic-inorganic composite structure coating layer forming an integral structure with the electrode assembly body (231).

3. The electrode assembly (23) according to claim 2, wherein the inorganic coating layer or the organic-inorganic composite structure coating layer forms an integral structure by means of vapor deposition, spraying or sputtering.

4. The electrode assembly (23) according to any one of claims 1 to 3, wherein all the non-contact surfaces (2313A) are provided with the separator coating portion (2341).

5. The electrode assembly (23) according to any one of claims 1 to 4, wherein the separator (2313) is provided with a reinforcing layer (23131) at the non-contact surface (2313A) on which the separator coating portion (2341) is provided, the reinforcing layer (23131) being formed by distributing a material of the separator coating portion (2341) from the non-contact surface (2313A) to an inner side of the separator (2313).

6. The electrode assembly (23) according to any one of claims 1 to 5, wherein the separator coating portions (2341) that cover at least part of the non-contact surfaces (2313A) at the same end of at least part of the adjacent separators (2313) join with each other.

7. The electrode assembly (23) according to any one of claims 1 to 6, wherein the end protective layer (234) further comprises:
a positive electrode coating portion (2342), the positive electrode coating portion (2342) covering at least part of surfaces of two end faces of the positive electrode plate body portion (2311) in the first direction (X) and forming an integral structure with the positive electrode plate body portion (2311); and/or
a negative electrode coating portion (2343), the negative electrode coating portion (2343) covering at least part of surfaces of two end faces of the negative electrode plate body portion (2312) in the first direction (X) and forming an integral structure with the negative electrode plate body portion (2312).

8. The electrode assembly (23) according to claim 7, wherein the separator coating portion (2341) joins with the positive electrode coating portion (2342) and/or the negative electrode coating portion (2343).

9. The electrode assembly (23) according to any one of claims 1 to 8, wherein the end protective layer (234) covers the whole surfaces of the two end faces of the positive electrode plate body portion (2311) in the first direction (X); and/or
the end protective layer (234) covers the whole surfaces of the two end faces of the negative electrode plate body portion (2312) in the first direction (X).

10. The electrode assembly (23) according to any one of claims 1 to 9, wherein the end protective layer (234) has a thickness of 0.01 µm to 100 µm.

11. The electrode assembly (23) according to claim 10, wherein the end protective layer (234) has a thickness of 0.05 µm to 5 µm.

12. A battery cell, comprising an electrode assembly (23) according to any one of claims 1 to 11.

13. A battery, comprising a battery cell according to claim 12.

14. A power consuming device, comprising a battery according to claim 13 configured to power the power consuming device.
